# EUROPEAN PATENT SPECIFICATION

(11) **EP 2 811 595 B1**
(45) Date of publication and mention of the grant of the patent: **16.12.2015**
(21) Application number: 12715410.2
(22) Date of filing: 02.02.2012
(51) Int. Cl.: H02G 3/04, H02G 3/06

(54) **PART FOR CONNECTING SEGMENTS OF BASKET CHANNELS FOR CABLES**
VERBINDUNGSELEMENT FÜR GITTERKABELRINNEN
ÉLÉMENT DE RACCORDEMENT POUR TRONCONS DE CHEMIN DE CABLES EN FILS

(43) Date of publication of application: 10.12.2014
(73) Proprietor: Aiscan, S.L., 03410 Biar (ES)
(72) Inventor: FRANCES PEREZ, Manuel, E-03410 Biar (ES)
(74) Representative: Arpe Fernandez, Manuel de
(86) International application number: PCT/ES2012/070068
(87) International publication number: WO 2013/113953

(56) References cited:
- EP-A2- 2 346 129
- DE-U1-202007 009 658
- ES-A1- 2 370 570

## Description

### FIELD AND PRIOR ART

The present invention generally refers to the laying and assembly of wire cable channels designed for the laying of wires in all kinds of works and constructions.

Wire cable channels, according to the current state of art, can be understood as those channelling built on the basis of a plurality of sections in the shape of a tray that are connected one after another. Each section of the cable channel is formed by a plurality of metallic wire bars that extend lengthwise and that are joined together by means of a series of U-shaped metallic wire bars transversely positioned and welded to the longitudinal bars, such longitudinal bars forming the side walls and the bottom wall of the channel.

As it has been previously mentioned, a certain number of cable channel sections must be joined one after another in a lengthwise direction in order to obtain a cable channel of a specific length.

The European Patent 0418167, also published as ES 2066167, discloses a quick-mount clamping device which is used to obtain a cable channel comprising at least two channel sections. This clamp is arranged as an elongate rigid strip, whose first end has the shape of an approximately semicylindrical longitudinal groove, which has been foreseen to tightly fit into one of the longitudinal wire bars of the cable channel, and which has a second end in the shape of a longitudinal flange extending in a direction opposite to the opening of the groove located at the first end - towards the inside part of the wire channel - and lugs or tabs that can be bent around a respective vertical section of the U-shaped transversal wire bar; when the lug or tab is folded, with the help of a special tool, it fits into an opening which has been foreseen in the body of the rigid strip.

Considering that the clamp according to this document is longitudinally arranged on the wire bars that form the upper part of the side walls of two adjacent sections of the cable channel, the channelling or channel resulting from the coupling of different sections offers a proper resistance against the pulling and twisting efforts occurring between sections, but shows little resistance against efforts made in a direction perpendicular to the laying direction of the channel, which are caused, for instance, by the weight of the cables, which is inadequate for the consistency of the channel assembly. Furthermore, as the longitudinal tab of the second end of such clamp extends towards the interior of the cable channel, this could cause eventual damages to the cables laid over the channel.

The European Patent 0973238, also published as ES 2279589, describes a wire cable channel consisting of different sections that can be assembled without the need for clamping devices, by attaching, in a longitudinal direction, one of the ends of the cable channel, which includes, at least, two U-shaped wire crossbars attached to the longitudinal wire bars and which are adequately spaced so that it is possible to snap-on fit a U-shaped wire crossbar present at the opposite side of an adjacent section of cable channel. This tight coupling of the complementary ends of the adjacent channel sections provides the resulting channel assembly with an appropriate resistance against any force applied in a direction which is perpendicular to the channel laying direction. However, this type of coupling is easily detached when it is subject to twisting forces between the different sections, in such channel laying direction, with the resulting risk that the sections may become uncoupled.

Additionally, document ES 2370570 A1, filed in the name of the applicant, proposes a clamping system to join wire cable channel sections and guarantee an adequate resistance against the efforts applied between the cable channel sections in a direction which is perpendicular to the channel laying direction and against the pulling and twisting efforts made in such channel lying direction. Taking this into consideration the system according a preferred embodiment includes an element with two clamp portions that are coupled together by means of a coupling means in the shape of a strip, which is configured to be bent forming an angle of 90°, so that each one of the clamp portions operationally faces the U-shaped wire bars located at the ends of two adjacent cable channel sections, each clamp portion being generally configured as a W-shaped piece, with two respective longitudinal grooves with a C-shaped cross section; a respective central portion which extends and connects the relevant horizontal grooves and which respectively includes a protrusion, as well as a series of respective flange sections that extend from the outer edges of the relevant longitudinal grooves and that can be bent from the outside towards the inside, surrounding the U-shaped wire bars of the cable channel.

The yoke clamps that were used in the prior art are very difficult to attach to the wire bars that form the relevant sections, as a result of the difficulties posed by the accurate size of the wire bars and the clamps, and those involved in giving way to the wire mesh sections, due to the scarce space available in the sections where pressure must be manually exercised.

On the other hand, the coupling shows a poor and inaccurate result, and the wire bars and clamps are frequently subject to relative displacements, and they usually must be welded, with the implicit loss of time, apart from the fragility of the coupling, which is scarcely resistant at the corner angles, and of the whole clamp; in some cases, both elements are disconnected since, in most occasions, the welding of two items made of different materials has no effectiveness. Additionally, and as a result of the little resistance shown by the coupling between the different clamp sections, according to the aforementioned document ES 2370570 A1, the element can move in any direction and it can be easily broken; in principle, its inclusion is only valid for the simultaneous positioning of the vertical and horizontal areas. The use of said coupling strip can be avoided if the two areas coupled by it are independently positioned and no welding is used, which effectively achieves savings in terms of labour; however, with the subsequent use, it is evident that the strip can become deformed in any direction; consequently, when they are subject to displacements or loads, they can suffer deformations that are not found in the wire bars of the trays covered by them; this entails the destruction of the coupling, which in principle, can only be avoided by welding the clamps and the wire mesh, which is a very difficult task with a high rate of failure, despite the fact that a special-purpose machine has been built to hat effect.

Furthermore, when they can be positioned for the coupling of the different sections, the said sections show less resistance to loads at the horizontal central section of the crossbars that are not covered by the clamp sections than in the case of the horizontal side sections of such wire bars that are effectively covered, and, for the same reason, than the vertical side parts of the crossbars. Furthermore, when the load is laid on the cable channel, the above mentioned clamp sections may suffer deformations, which involves a short service life and lack of stability of the whole assembly. Additionally, under load conditions, the crossbars tend to move in the opposite direction to that of the part covered by the clamp sections or, in other words, the clamp sections move in the opposite direction to that of the channel bars and, in any case, the clamp sections tend to be disconnected from the wire bars.

Additionally, it must be also mentioned that the clamps may rotate in relation to the wire bars, since the coupling means do not prevent such movement.

Thus, the relative motion between the clamps and the wire bars that occurs as a result of the channel load may deform the clamps that in turn may become disconnected from the channel wire bars.

DE 202007009658 U1 discloses a connecting piece can be made of a single U-shaped element. The central branch and the relevant side branches of such U-shaped connecting piece are hollow, and their cross-section has the shape of a C, approximately, and are coupled together by means of a narrower section basically in the shape of a band. This structure, at its corner areas, i.e. in the intersection areas between the side and the central branches, lacks the necessary rigidity to prevent the bending and/or twisting between the side branches and the central branch, when traction and/or torsion efforts are applied between them.

### Object of the invention

On the basis of the previously described state of the art, the object of the invention is to provide a connecting piece for wire cable channelling sections according to the previous paragraphs, that can be easily produced and used, and that allows a solid and hard wearing connection between the different sections, without the previously mentioned disadvantages.

According to the invention, such object is achieved by means of the characteristics included in claim 1. Other characteristics and advantages will be apparent from the characteristics listed in the dependent claims.

The connecting piece for tray-type wire cable channelling sections, which consists of U-shaped crossbars with a central branch and side branches, as well as longitudinal wire bars, is provided with a front part and a rear part where the wire crossbars of the ends of two adjacent cable channelling sections are tightly fitted. Such rear part is configured with a cross sectional area generally in the form of a W, having:
- two longitudinal grooves with a C-shape cross section, where the wire crossbars are tightly fitted;
- a central portion that extends connecting the relevant longitudinal grooves; and
- corresponding flange sections that extend from the outer edges of the relevant longitudinal grooves to be overlapped at the peripheral area of such wire crossbars of the relevant cable channelling section,
   and according to the invention, it is characterized in that:
- such connecting piece (1) is generally configured in the shape of an U with a central branch (10) which extends practically covering the whole length of the corresponding central branch (Vt1) of the cross wire bars; and the corresponding side branches (11) that form an angle with the central branch (10), which is equal to, or greater than the angle formed by the side branches (Vt2) and the central branch (Vt1) of the crossbars of the cable channelling, and each one of the side branches (11) is extended covering fully or partially the corresponding side branch (Vt2) of the cross wire bars;
- the flanges (32) corresponding to the side branches (11) of such connecting piece (1) is equal to or smaller than the transverse distance between the adjacent longitudinal bars (V1) of the cable channelling, where the said flanges are configured with a lower bevel edge (320) inclined downwards, which allows the fitting between the bars (V1) and the connecting piece (1) and acts as an upper stop to avoid the demounting of the connection when vertical forces are applied in an upwards direction.

According to an additional characteristic of the present invention it is advantageous that at least the flange corresponding to the central branch is provided with notches through which the longitudinal bars of the cable channelling may run.

According to yet another additional characteristic of the invention it is advantageous that the central portion located between the grooves has rounded longitudinal edges to allow the insertion of the crossbars of the cable channels.

This way, every pair of tray sections is connected through a single connecting piece, which allows to reduce labour costs when compared with those systems that use two clamps, as the adaptation to the wire channels is much more easier and safer, since it is possible to appropriately press broad areas of tray sections, in order to obtain a reversible temporary deformation, which allows to connect the pieces and subsequently recover its original form, instead of pressing on a small area, as in the case of the previous state of art since, which apart from the difficulties it entails for the operator in some occasions it might involved the permanent deformation of the clamps that form the channels where the wire bars run. However, the positive deformation effect of the tray, which is forced by the fixed connecting piece which entails a short and punctual deformation of the tray, until it is introduced within the channels of the connecting piece, to come back to its original position, but already inside the channels of the connecting piece.

The coupling and uncoupling between the connecting piece and the cable channel tray sections is easily achieved by means of pulling efforts exercised in both horizontal directions on one of the sides of the tray sections and vertical stresses exercised downwards, once the piece has been adequately positioned so that its channels cover the crossbars of such sections. This way, the coupling and uncoupling operations can be performed adequately and in a very easy manner.

The grooved shape of the connecting piece provides rigidity to the corner angles and to the connecting piece as a whole, which, as it has been already mentioned, forces the wire elements to give way and, once the coupling between the wire bars and the connecting piece has been adjusted, they return to their original condition and remain strongly mounted inside the channels of the connecting piece with a "click" (snap-on fitting), since when the longitudinal wire bar or bars of the corresponding cable channels contact the flanges of the side parts of the piece, they penetrate inside the channels, and the sound produced by the snap-on fitting corroborates that the coupling has been perfectly achieved in a safe manner, and that it can be easily uncoupled.

Furthermore, as the general "U"-shaped cross-section of the connecting piece extends throughout the whole coupling, it allows that the cable channelling may safely support higher loads at the section coupling area.

The connecting piece locks the wire bars in both directions that are perpendicular to its axes, which prevents them from being coupled together or uncoupled since, when channelling section is loaded, the vertical side coupling works under compression forces, and the horizontal ones, under pulling forces.

Since the connecting piece has the shape of an "U", like the crossbars, and not that of an "L", as in the case of the clamps of prior systems, it is impossible to exercise a rotational load around any of the axes of the wire bars.

The only possible motion of the connecting piece allowed by this system, once it has been appropriately snap-on fitted to the channelling sections would be a motion parallel to the side wire bars, in the opposite direction to the bottom, and only in case that the connection of the flanges of the side elements is forcibly released.

The physical reason for this safety is basically the result of the fact that, in the case of the coupling between the clamps of the prior art and the trays, the clamps are deformed to a greater or lesser extent and this, along with the stability of the wire bars, tends to force the separation of both items; however, the coupling of the connecting piece according to the invention remains unaltered and static, and the temporary deformation takes place in the relevant section of the channelling, which places the connecting piece inside the channels, correctly positioned as a result of the reaction forces.

### Brief description of the figures

Other characteristics and advantages of the invention will be apparent from the following description, that has been made with the help of the attached drawings, that show an exemplary non-limitative embodiment, and where:
Figure 1 shows a perspective top view, showing the front part of the connecting piece according to the invention.
Figures 2 and 3 respectively show detailed perspective views of the rear part of the connecting piece shown in Figure 1.
Figures 4 y 5 show perspective plan views of the assembly of two adjacent cable channel sections using the connecting piece shown in figures 1 to 3.

### Detailed description of a preferred embodiment

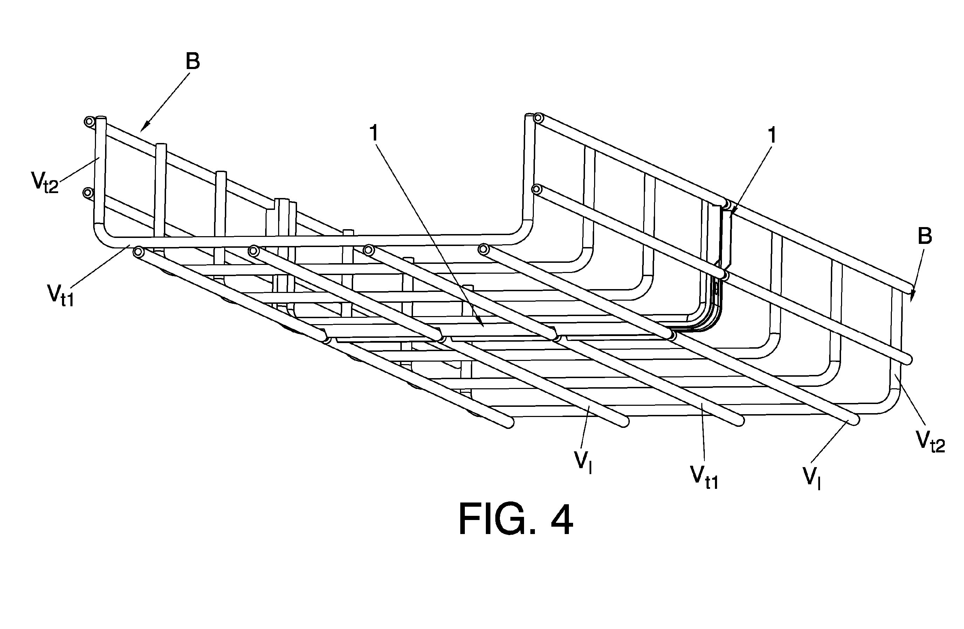

As it can be seen with more detail in the figures, the connecting piece, which has been generally designated by means of the numerical reference 1, has been foreseen to couple two cable channelling sections B, B that are adjacent lengthwise, as it can be clearly appreciated in figure 4.

The connecting piece 1 has a front part 2 and a rear part 3 which is used for the snap-on fitting of the cross wire bars Vt1-Vt2 of the ends of two channel sections.

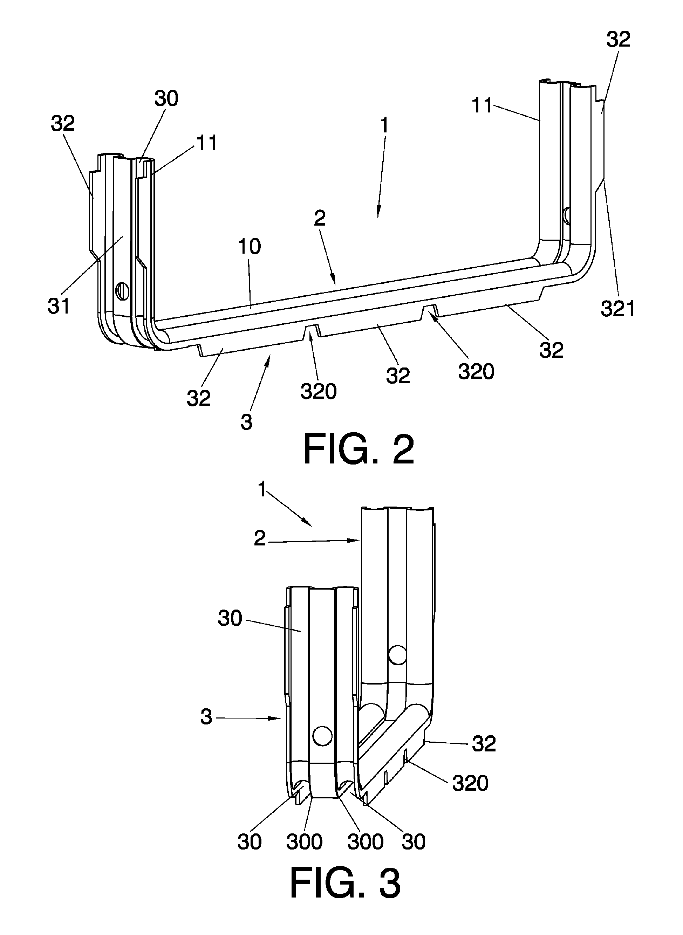

As it can be clearly appreciated in figures 2 and 3, the rear part 3 of the connecting piece 1, has a cross-section with a W-shape, which has, on the one hand, two respective longitudinal grooves 30 with a C-shaped cross-section, where the mentioned wire bars are fitted, and a central portion 31 which extends connecting the respective longitudinal grooves; and on the other hand, corresponding flanges 32 that extend from the outer edges of the respective longitudinal grooves 30 to be overlapped at the outer edge of the said cross wire bars Vt1, Vt2 of the corresponding channellling section B.

The connecting piece 1 is generally configured in the shape of an U with a central branch 10 which extends practically covering the whole length of the relevant central branch Vt1 of the cross bars, and the respective side branches 11 that extend forming an angle with the central branch 10 that is equal to or greater than the angle formed by the two side branches Vt2 and the central branch Vt1 of the cross bars of the cable channelling. Furthermore, each one of the side branches 11 extends covering, either fully or partially, the corresponding side branch Vt2 of the cross bars.

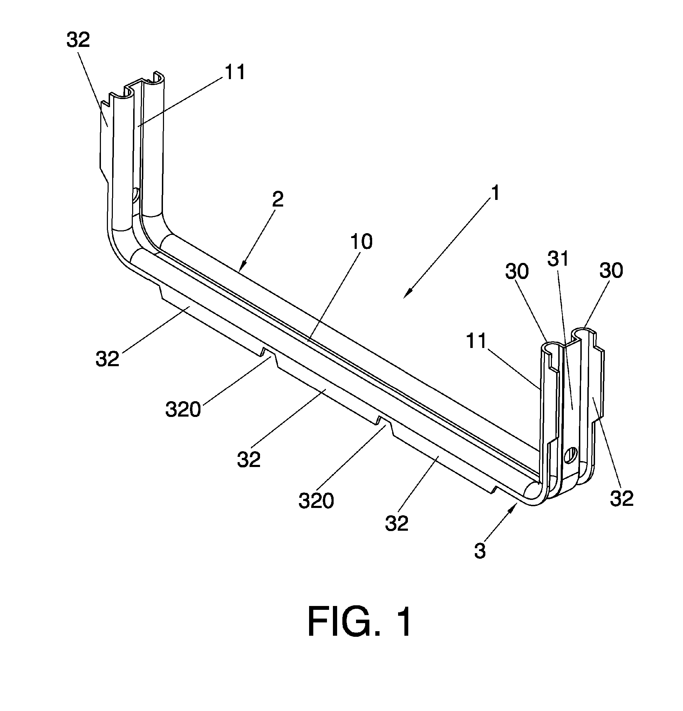

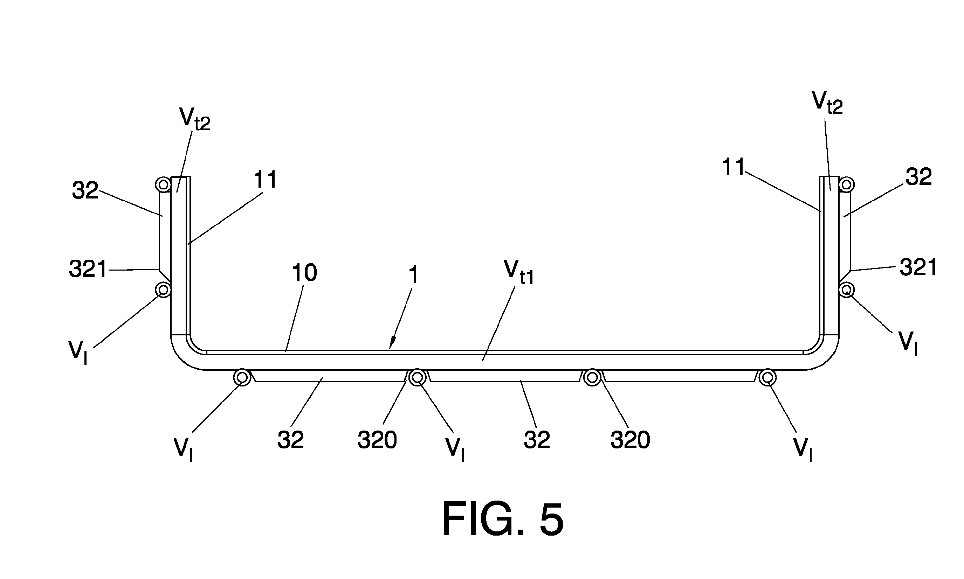

As it can be seen in Figures 1 to 3 and in a specially clear manner, in Figure 5, the flange 32 corresponding to the central branch 10 of the connecting piece 1 can be optionally provided with notches 320 through which the longitudinal wire bars V1 of the cable channelling sections B may run.

As it can be also appreciated in Figure 5, the flanges 32 corresponding to the side branches 11 of the said connecting piece 1 have an extension that corresponds to the cross distance between every two other adjacent longitudinal wire bars V1, the said flanges being provided with a bevel edge 321 inclined downwards, which serves to retain such longitudinal wire bars. Thus, the connection with the connection piece only demands a modest effort to be dismounted; however, once the sections have been connected, they cannot be dismounted as a result of the vertical forces exercised in an upwards direction.

As it can be especially appreciated in Figure 3, it can be seen that the central portion 31 of the connecting piece 1, which is located between the grooves 30 has rounded longitudinal edges 300 to facilitate the insertion of the cross wire bars of the cable channelling.

As it will be easily understood by any person skilled in the art, the above paragraphs are a mere description, made for illustration purposes, of a preferred embodiment of the invention. Consequently, it is possible to introduce any kind of technical modifications.

Once the object of the invention has been sufficiently described, it must be stated that any embodiments derived from changes in shape, size and other similar changes, as well as those resulting from the application of what has been disclosed above should be considered included within the scope of the invention, so that the invention will only be limited by the scope of the following claims.

## Claims

1. Connecting piece of tray-type wire cable channelling sections (B) consisting of U-shaped cross wire bars with a central branch (Vt1) and side branches (Vt2), and longitudinal wire bars (Vl), where said connecting piece (1) is provided with a front side and a rear side, to tightly fit the cross wire bars (Vt1-Vt2)) located at the ends of two adjacent cable channelling sections (B, B), said connecting piece being generally configured with a W-shaped cross-section, having:
- two longitudinal grooves (30) with a C-shaped cross-section, where the said wire bars are fitted;
- a central portion (31) which extends and connects the corresponding longitudinal grooves; and
- corresponding flanges (32) that extend from the outer edges of the relevant longitudinal grooves (30) to be overlapped at the peripheral area of such wire crossbars of the relevant cable channelling section,
wherein:
- such connecting piece (1) is generally configured in the shape of an U with a central branch (10) which extends practically covering the whole length of the corresponding central branch (Vt1) of the cross wire bars; and the corresponding side branches (11) that form an angle with the central branch (10), which is equal to, or greater than the angle formed by the side branches (Vt2) and the central branch (Vt1) of the crossbars of the cable channelling, and each one of the side branches (11) is extended covering fully or partially the corresponding side branch (Vt2) of the cross wire bars;
- the flanges (32) corresponding to the side branches (11) of such connecting piece (1) is equal to or smaller than the transverse distance between the adjacent longitudinal bars (V1) of the cable channelling, where the said flanges are configured with a lower bevel edge (320) inclined downwards, which allows the fitting between the bars (V1) and the connecting piece (1) and acts as an upper stop to avoid the demounting of the connection when vertical forces are applied in an upwards direction,
and wherein
- the corner portions connecting the central branch (10) and the relevant side branches (11) of the U-shaped connecting piece (1) have been configured with a W-shaped cross section by extending the cross-sections of the relevant side branches (11) and the central branch (10).

2. Connecting piece according to claim 1, **characterized in that** at least the flange (32) corresponding to the central branch (10) are provided with notches (320) through which the longitudinal bars (V1) of the cable channelling (B) may run.

3. Connecting piece according at least to any of the previous claims, **characterized in that** the central portion (31) located between the grooves (30) has rounded longitudinal edges (300) to facilitate the insertion of the cross wire bars of the cable channelling assembly.

## Patentansprüche

1. Verbindungsstück für Kabelkanalstrecken von Kabelgitterpritschen (B) basierend auf U-förmigen Querstäben mit einem zentralen Kabelzweig (Vt1) und seitlichen Kabelzweigen (Vt2), wobei besagtes Verbindungsstück (1) mit einem Vorder- und einem Hinterteil versehen ist, in das die Querdrahtstäbe (Vt1-Vt2) der äusseren Enden der beiden Kanalstrecken für aneinanderstossende Kabel (B, B) im Passsitz eingefügt werden, wobei besagtes Hinterteil einen normalerweise W-förmigen Querschnitt hat und folgendes aufweist:
- Zwei Längsrillen (30) mit einem C-förmigen Querschnitt jede, in die die erwähnten Drahtstäbe eingefügt werden.
- Einen Mittelteil (31), der sich so erstreckt, dass er die entsprechenden Längsrillen verbindet.
- Die entsprechenden Flügel (32), die sich ab den Aussenrändem der entsprechenden Längsrillen (30) erstrecken, um den Umfang besagter Querdrahtstäbe der entsprechenden Kabelkanalstrecke zu überdecken.
wobei:
- Besagtes Verbindungsstück (1) eine allgemein U-förmige Konfiguration mit einem zentralen Kabelzweig (10) aufweist mit einer Länge, die praktisch die gesamte Länge des entsprechenden zentralen Zweigs (Vt1) der Querstäbe deckt, und mit den entsprechenden Seitenzweigen (11), die zusammen mit dem zentralen Zweig (10) einen Winkel bilden, der gleich oder grösser ist als der durch die beiden Seitenzweige (Vt2) und den zentralen Zweig (Vt1) der Querstäbe des Kabelkanals gebildeter Winkel, bei dem jeder seiner Seitenzweige (11) sich so erstreckt, dass er vollständig oder teilweise den entsprechenden Seitenzweig (Vt2) der Querstäbe deckt;
Die Längsausdehnung der entsprechenden Flügel (32) der Seitenzweige (11) dieses Verbindungsstücks (1) ist gleich oder kleiner als die Querdistanz zwischen aneinanderstossenden Längsstäben (VI) der Kabelkanäle und besagte Flügel sind mit einer unteren, nach unten gerichteten Abkantung (320) versehen, die ein Einrasten zwischen den Stäben (VI) und dem Verbindungsstück (1) ermöglicht und als oberer Anschlag dient, der ein Trennen der Verbindung durch vertikale, nach oben gerichtete Kräfte verhindert,
wobei:
- Die Ecken des U-förmigen Verbindungssstücks (1), die den zentralen Kabelzweig (10) und die entsprechenden Seitenzweige (11) verbinden, wurden mit einem W-förmigen Querschnitt konstruiert und zwar mittels der Verlängerung der Querschnitte der entsprechenden Seitenzweige (11) des zentralen Kabelzweiges (10).

2. Ein Verbindungsstück übereinstimmend mit Anspruch 1, **dadurch gekennzeichnet, dass** zumindest der dem zentralen Kabelzweig (10) entsprechende Flügel (32) mit Aussparungen (320) versehen ist, durch die die Längsstäbe (VI) der Kabelkanäle (B) verlaufen können.

3. Ein Verbindungsstück gemäss zumindest einem der obigen Ansprüche, **dadurch gekennzeichnet, dass** der mittlere Teil (31) zwischen den Rillen (30) mit abgerundeten Längsrändern (300) ausgebildet ist, um so das Einführen der Querstäbe der Kabelkanäle zu erleichtern.

## Revendications

1. Pièce de jonction de segments de canalisations pour chemins de câbles en fils soudés (B), munie de tiges transversales en U avec une branche centrale (Vt1), de branches latérales (Vt2) et de tiges longitudinales (VI), cette pièce de jonction (1) disposant d'une partie antérieure et d'une partie postérieure dans laquelle rentrent avec précision les tiges transversales en fils (Vt1-Vt2) des extrémités des deux segments de canalisation pour câbles contigus (B, B), cette partie postérieure comportant une section transversale généralement en W qui possède :
- deux cannelures longitudinales (30) ayant une section transversale en forme de C, dans lesquelles rentrent lesdites tiges en fils ;
- un tronçon central (31) qui s'étend tout en unissant les cannelures longitudinales respectives; et
- des ailettes (32) respectives qui s'étendent des bords extérieurs des cannelures longitudinales (30) respectives pour se chevaucher à la périphérie de ces tiges en fils transversales du segment de canalisation pour câbles,
sachant que :
- cette pièce de jonction (1) a été conçue en forme de U, avec une branche centrale (10) qui s'étend en couvrant pratiquement la totalité de la longueur de la branche centrale (Vt1) des tiges transversales; ainsi qu'avec des branches latérales (11) respectives qui forment, avec la branche centrale (10), un angle égal ou supérieur à l'angle formé par les branches latérales (Vt2) et la branche centrale (Vt1) des tiges transversales de la canalisation pour câbles, et dont chacune des branches latérales (11) s'étend en couvrant totalement ou partiellement la branche latérale respective (Vt2) des tiges transversales; les ailettes (32) qui correspondent aux branches latérales (11) de cette pièce de jonction (1) ont une extension longitudinale égale ou inférieure à la distance transversale entre les tiges longitudinales (VI) contigües de la canalisation pour câbles, et ces ailettes comportent un biseau inférieur (320) incliné vers le bas, qui permet d'encastrer les tiges (VI) et la pièce de jonction (1) et agit comme une butée supérieure pour empêcher que la liaison ne se défasse suite à l'application d'efforts verticaux dans le sens ascendant,
sachant que :
- les coins qui relient la branche centrale (10) et les branches latérales (11) respectives de la pièce de jonction en forme de U (1) ont été pourvus d'une section transversale en forme de W, moyennant l'allongement des sections transversales des branches latérales (11) correspondantes et de la branche centrale (10).

2. Pièce de jonction selon la revendication 1 **caractérisée en ce que**, au moins, l'ailette (32) qui correspond à la branche centrale (10) est munie de rainures (320) à travers lesquelles les tiges longitudinales (VI) de la canalisation pour câbles (B) peuvent passer.

3. Pièce de jonction selon au moins l'une des revendications précédentes **caractérisée en ce que** le tronçon central (31) situé entre les cannelures (30) est muni de bords longitudinaux (300) arrondis pour faciliter l'insertion des tiges transversales de la canalisation pour câbles.
